Europäisches Patentamt

European Patent Office

Office européen des brevets

(19)

(11) **EP 0 848 641 B1**

(12) **FASCICULE DE BREVET EUROPEEN**

(45) Date de publication et mention
de la délivrance du brevet:
**02.01.2004 Bulletin 2004/01**

(51) Int Cl.7: **B01D 53/86**, B01J 23/74

(21) Numéro de dépôt: **97919440.4**

(22) Date de dépôt: **28.03.1997**

(86) Numéro de dépôt international:
**PCT/FR1997/000565**

(87) Numéro de publication internationale:
**WO 1997/037750 (16.10.1997 Gazette 1997/44)**

(54) **PROCEDE D'OXYDATION DIRECTE DES COMPOSES SOUFRES EN SOUFRE A L'AIDE D'UN CATALYSEUR A BASE DE CUIVRE**

VERFAHREN FÜR DIE DIREKTE OXIDATION VON SCHWEFELVERBINDUNGEN ZU ELEMENTAREM SCHWEFEL MIT EINEM KUPFER ENTHALTENDEN KATALYSATOR

DIRECT OXIDATION METHOD FOR CONVERTING SULPHUR COMPOUNDS INTO SULPHUR WITH A COPPER CATALYST

(84) Etats contractants désignés:
**AT BE CH DE DK ES FI FR GB GR IE IT LI LU MC NL PT SE**

(30) Priorité: **03.04.1996 FR 9604164**

(43) Date de publication de la demande:
**24.06.1998 Bulletin 1998/26**

(73) Titulaire: **Institut Français du Pétrole
92852 Rueil-Malmaison Cedex (FR)**

(72) Inventeurs:
• **LEGENDRE, Olivier
F-95220 Herblay (FR)**
• **NEDEZ, Christophe
F-30340 Salindres (FR)**

(56) Documents cités:
**EP-A- 0 015 801          EP-A- 0 039 266
EP-A- 0 115 449          EP-A- 0 499 095
FR-A- 2 538 716**

**Description**

La présente invention concerne l'utilisation de catalyseurs pour le traitement des gaz, notamment des effluents gazeux industriels, contenant des composés soufrés, en vue de la transformation catalytique de ces composés en produits facilement éliminables.

Elle concerne plus particulièrement l'utilisation de catalyseurs pour l'oxydation directe de l'hydrogène sulfuré en soufre et/ou en sulfates.

La désulfuration des gaz contenant de faibles concentrations d'hydrogène sulfuré connaît un développement notable. Ce traitement s'applique dans différents domaines :

- pour des contraintes liées à la protection de l'environnement, les effluents provenant des unités Claus, appelés également "gaz de queue", sont de plus en plus soumis à un traitement supplémentaire, dit traitement de gaz de queue.

  Les composés résiduaires de ces gaz de queue (soufre vapeur, dioxyde de soufre, composés organiques du soufre : $CS_2$, COS, ...) peuvent être éliminés par hydrogénation en hydrogène sulfuré, puis cet hydrogène sulfuré est transformé en soufre élémentaire et/ou sulfates.

  On peut aussi envisager en sortie du dernier réacteur Claus de mettre en oeuvre un décalage volontaire du ratio $H_2S/SO_2$ puis de faire passer l'effluent sur un catalyseur permettant de convertir le $SO_2$ restant en soufre via la réaction de Claus ($2\,H_2S + SO_2 \rightarrow 3/x\,S_x + 2\,H_2O$). Puis, une étape finale d'oxydation directe de l'$H_2S$ en soufre et/ou sulfates finit d'achever le traitement.

- on traite également les gisements (gaz naturel, sources géothermiques, ...) contenant des gaz présentant naturellement une faible concentration en hydrogène sulfuré. Dans certains cas, une désulfuration basée sur un procédé Claus s'avère difficile sinon impossible et un procédé de conversion directe de l'hydrogène sulfuré en soufre et/ou sulfates est préférable.

La présente invention a trait aux procédés mettant en oeuvre la réaction finale de conversion de l'hydrogène sulfuré en soufre élémentaire et/ou en sulfates en présence d'oxygène, et en particulier à une température inférieure à la température de rosée du soufre, i.e. inférieure à 200°C. L'intérêt de travailler à une telle température est, d'une part, de pouvoir récupérer le soufre sous forme liquide ou solide dans la porosité du catalyseur, et d'autre part, de déplacer l'équilibre thermodynamique dans le sens favorable à la réaction de formation du soufre.

Toutefois, le défaut de ce genre de procédé est que simultanément à la formation du soufre élémentaire, il est fréquent de produire en parallèle du dioxyde de soufre, lequel n'est pas retenu sur le catalyseur d'où une perte en rendement de l'épuration des gaz.

Ainsi les catalyseurs de l'art antérieur ne permettent pas d'assurer la meilleure conversion possible de l'$H_2S$ avec des sélectivités maximale en soufre et/ou sulfates et minimale en $SO_2$.

Un procédé d'oxydation directe de l'hydrogène sulfuré en soufre à l'aide d'un catalyseur contenant du cuivre est connu par le document EP-A-0 499 095.

Un but de la présente invention est de proposer un catalyseur permettant, lors de la réaction d'oxydation directe des composés soufrés à basse température (T < 200°C), d'augmenter la conversion de l'$H_2S$ tout en minimisant la conversion en $SO_2$.

En particulier, un but de la présente invention est de proposer un catalyseur permettant d'obtenir, au cours de la réaction définie ci-dessus, une taux de conversion de $H_2S$ proche de 100 % et un taux de rendement en $SO_2$ proche de 0 %.

Dans ce but, l'invention concerne un procédé d'oxydation directe des composés soufrés en soufre élémentaire et/ou en sulfates à température inférieure à 200°C, dans lequel on utilise un catalyseur supporté dont la phase catalytiquement active comprend du cuivre, l'élément cuivre étant présent dans une teneur d'au moins 2 % en poids par rapport au catalyseur et d'au moins 15 % en poids par rapport à la somme des éléments actifs de la phase catalytiquement active.

D'autres, détails et avantages de l'invention apparaîtront plus clairement à la lecture de la description qui suit.

L'invention concerne donc un procédé d'oxydation directe des composés soufrés en soufre élémentaire et/ou en sulfates à température inférieure à 200°C, dans lequel on utilise un catalyseur supporté dont la phase catalytiquement active comprend du cuivre, l'élément cuivre étant présent dans une teneur d'au moins 4 % en poids par rapport au catalyseur et d'au moins 15 % en poids par rapport à la somme des éléments actifs de la phase catalytiquement active.

Dans le procédé selon l'invention, le catalyseur est un catalyseur supporté, c'est-à-dire qu'il se compose d'un support et d'une phase catalytiquement active déposée sur ce support. La phase catalytiquement active de ce catalyseur se caractérise par le fait qu'elle comprend du cuivre. Le cuivre peut se présenter sous la forme d'oxyde et/ou d'un sel de cuivre, ce dernier pouvant être choisi, par exemple, parmi le nitrate, le sulfate ou le chlorure de cuivre.

En outre, le catalyseur doit comprendre du cuivre dans une certaine quantité pour remplir les buts fixés dans la présente invention. Ainsi, l'élément cuivre doit être présent dans une teneur d'au moins 4 % en poids par rapport au catalyseur. L'élément cuivre doit également être présent dans une teneur d'au moins 15 % en poids par rapport à la somme des éléments actifs de la phase catalytiquement active, de préférence d'au moins 25 %. Des résultats particulièrement intéressants été obtenus pour une teneur en cuivre d'au moins 30 %, et surtout d'au moins 35 % en poids par rapport à la somme des éléments actifs de la phase catalytiquement active.

En général, la teneur en éléments catalytiquement actifs (cuivre et autres que le cuivre) est d'au plus 80 % en poids par rapport au catalyseur.

Selon une première variante de l'invention, le procédé selon l'invention met en oeuvre un catalyseur dans lequel le cuivre représente 100 % en poids de la somme des éléments actifs de phase catalytiquement active. Donc, la phase catalytiquement active du catalyseur ne comprend que des composés du cuivre en tant qu'agents catalytiquement actifs.

Cependant, impuretés ou éléments autres que le cuivre en quantités suffisamment négligeables pour ne pas présenter d'effet catalytique peuvent être présents.

Dans cette première variante, des résultats particulièrement bons sont obtenus pour une teneur en cuivre d'au moins 6 % en poids par rapport au catalyseur.

Selon une deuxième variante de l'invention, la phase catalytiquement active comprend du cuivre et au moins un autre élément actif choisi parmi le fer, le molybdène, le titane, le nickel, le cobalt, l'étain, le germanium, le gallium, le ruthénium, l'antimoine, le niobium, le manganèse, le vanadium, le magnésium, le calcium et le chrome. De préférence, il s'agit d'un des éléments suivants : le fer, le nickel, le cobalt, le calcium, le molybdène, le vanadium et le ruthénium.

Comme le cuivre, ces éléments peuvent être présents sous forme d'oxydes ou de sels tels que des sulfates, nitrates ou chlorures.

Selon le mode préféré de cette deuxième variante, la phase catalytiquement active se compose de cuivre et de cobalt, la teneur en cobalt étant d'au plus 5 % en poids par rapport au catalyseur et la teneur en cuivre d'au moins 6 % en poids par rapport au catalyseur.

Le support du catalyseur est en général à base de dioxyde de titane, de zircone, de silice, de silice-alumine ou d'alumine.

Habituellement les catalyseurs se présentent sous la forme de billes, cependant toute forme peut être envisagée, notamment extrudés de formes pleines ou creuses, à profil cylindrique ou multilobé, concassés, pastilles, granulés, monolithes plus particulièrement sous forme de nids d'abeilles.

De préférence, ils se présentent sous la forme de billes de diamètre compris entre 1 et 10 mm ou d'extrudés de section transversale comprise entre 0,7 et 5 mm.

Le support peut comprendre également des additifs pour faciliter la mise en forme et des additifs pour améliorer le propriétés mécaniques finales.

On peut faire appel dans la préparation du catalyseur de l'invention aux additifs classiquement utilisés dans les techniques de mise en forme. Ces additifs confèrent à la pâte obtenue par malaxage les propriétés rhéologiques adaptées à la mise en forme. A titre d'exemple, on peut citer notamment : la cellulose, la carboxyméthylcellulose, la carboxyéthylcellulose, du tall-oil, les gommes xanthane, des agents tensio-actifs, des agents floculants comme les polyacrylamides, le noir de carbone, les amidons, l'acide stéarique, l'alcool polyvinylique, des biopolymères, le glucose, les polyéthylène glycol. La quantité de ces additifs peut varier entre 0 et 15 % en poids par rapport au poids du catalyseur.

De plus, il est possible de mettre en oeuvre des constituants complémentaires susceptibles d'améliorer les qualités mécaniques des formulations. Ces constituants peuvent être choisis parmi les argiles, les silicates, les sulfates d'alcalino-terreux, les fibres céramiques, l'amiante. Ces constituants peuvent être utilisés dans des quantités en poids par rapport au support pouvant aller jusqu'à 99,5 % en poids, particulièrement jusqu'à 60 %, de préférence jusqu'à 30 %.

Les supports peuvent être obtenus par mise en forme de la matière de base du support, se présentant sous forme de poudre, à l'aide, par exemple, d'une machine à pastiller, d'un granulateur tournant ou d'une extrudeuse. Les supports obtenus sont ensuite généralement séchés et calcinés.

Lors de la mise en forme, la matière de base peut être mélangé à des additifs.

Lorsque le support est à base d'alumine, il est préférable d'utiliser une alumine présentant une surface spécifique (SS) d'au moins 20 m$^2$/g, voire d'au moins 40 m$^2$/g. Cette surface spécifique est une surface mesurée par la méthode BET.

On entend par surface mesurée par la méthode BET, la surface spécifique déterminée par adsorption d'azote conformément à la norme ASTM D 3663-78 établie à partir de la méthode BRUNAUER - EMMETT - TELLER décrite dans le périodique "The Journal of the American Society", 60, 309 (1938).

Il est souhaitable également que l'alumine du support du catalyseur présente un volume poreux total (VPT) d'au moins 0,3 cm$^3$/g, de préférence d'au moins 0,4 cm$^3$/g. Ce VPT est mesuré de la façon suivante : on détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$\frac{1}{Dg} - \frac{1}{Da}.$$

Ces supports de catalyseur peuvent être obtenus par toute technique connue de l'homme du métier.

En ce qui concerne l'alumine, la poudre d'alumine utilisée comme matière de départ pour la préparation du support peut être obtenue par des procédés classiques tels que le procédé par précipitation ou gel, et le procédé par déshydratation rapide d'un hydroxyde d'alumine tel que l'hydrate de Bayer (hydrargillite). Cette dernière alumine est celle préférée de l'invention.

S'il s'agit de billes d'alumine, elles peuvent être issues d'une mise en forme par coagulation en gouttes. Ce type de billes peut par exemple être préparé selon l'enseignement des brevets EP-A-0 015 801 ou EP-A-0 097 539. Le contrôle de la porosité peut être réalisé en particulier selon le procédé décrit dans le brevet EP-A-0 097 539 par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant. Ladite phase organique peut en particulier être un hydrocarbure, l'agent surfactant ou émulsionnant est par exemple du Galoryl EM 10®.

Les supports en forme de billes peuvent être aussi obtenus par agglomération d'une poudre d'alumine. L'agglomération en forme de billes s'effectue directement sur la poudre d'alumine par technologie tournante. On entend par technologie tournante tout appareil dans lequel l'agglomération s'effectue par mise en contact et rotation du produit à granuler sur lui-même. Comme appareil de ce type, on peut citer le drageoir tournant, le tambour tournant. Ce type de procédé permet d'obtenir des billes de dimensions et de répartitions de pores contrôlées, ces dimensions et ces répartitions étant, en général, créées pendant l'étape d'agglomération. Le contrôle des volumes des pores de diamètre donné peut également être réalisé au cours de cette étape d'agglomération par un réglage adéquat du débit d'introduction de la poudre d'alumine et éventuellement d'eau, de la vitesse de rotation de l'appareil ou lors de l'introduction d'une amorce de mise en forme.

Si les supports sont des extrudés d'alumine, ils peuvent être obtenus par malaxage puis extrusion d'une matière à base d'alumine, ladite matière pouvant être issue de la déshydratation rapide d'hydrargillite ou de la précipitation d'un gel d'alumine. Le contrôle de la porosité des extrudés peut être réalisé par les conditions opératoires de malaxage de cette alumine avant extrusion. L'alumine peut aussi être mélangée lors du malaxage à des porogènes. A titre d'exemple, les extrudés peuvent être préparés par le procédé de préparation décrit dans le brevet US-A. 3.856.708.

Si les supports d'alumine sont des concassés, ils peuvent être issus du concassage de tout type de matière à base d'alumine telle que, par exemple, des billes obtenues par tous types de procédé (coagulation en gouttes, drageoir ou tambour tournant) ou des extrudés. Le contrôle de la porosité de ces concassés se fait par le choix de la matière à base d'alumine que l'on concasse pour les obtenir.

Quelle que soit la forme des supports d'alumine, la porosité peut être créée par différents moyens comme le choix de la granulométrie de la poudre d'alumine ou le mélange de plusieurs poudres d'alumine de différentes granulométries. Une autre méthode consiste à mélanger à la poudre d'alumine, avant ou pendant les étapes d'agglomération ou d'extrusion, un composé, appelé porogène, disparaissant totalement par chauffage et créant ainsi une porosité dans les supports.

Comme composés porogènes utilisés, on peut citer, à titre d'exempte, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés n'est pas critique et est déterminée par le volume poreux désiré.

Suite à leur mise en forme, les supports d'alumine obtenus peuvent être soumis à différentes opérations destinées à améliorer leur résistance mécanique telles qu'un mûrissement par maintien dans une atmosphère à taux d'humidité contrôlée, suivi d'une calcination puis d'une imprégnation des supports par une solution d'un ou plusieurs acides et un traitement hydrothermal en atmosphère confinée.

Enfin, après ces différents traitements, les supports sont séchés et calcinés.

Lorsque le support de catalyseur est à base de dioxyde de titane, il peut être obtenu par toute méthode de préparation connue de l'homme du métier. Une méthode est celle décrite dans les documents EP-A-038741 et EP-A-060741, qui consiste à extruder un mélange comprenant :

- de 1 à 40 % en poids d'eau,
- de 0 à 15 % en poids d'additifs de mise en forme tels que définis précédemment,
- de 45 à 99 % en poids d'une poudre de dioxyde de titane mal cristallisé et/ou amorphe présentant une perte au feu entre 1 et 50 %,

puis à mettre en forme ce mélange et à le sécher et calciner.

Lorsque le support de catalyseur est à base de zircone, il peut être obtenu par toute méthode de préparation connue de l'homme du métier. On peut citer notamment dans ce cas une préparation par précipitation par addition d'un composé basique, par exempte l'ammoniaque, à une solution d'un précurseur acide du zirconium par exemple un nitrate, chlorure ou sulfate de zirconium. Cette préparation peut d'ailleurs être conduite en inversant l'ordre des réactifs.

On peut citer comme autres modes de préparation de l'oxyde de zirconium, les procédés par calcination, notamment, la calcination directe d'un précurseur du type précité, par exemple dans une flamme. Enfin, on peut mentionner les procédés d'obtention à partir d'un sol, en particulier la préparation par passage par un sol issu de l'hydrolyse à chaud d'une solution d'un précurseur du type précité.

Le dépôt de la phase catalytiquement active sur ou dans le support peut être réalisé par toute méthode connue de l'homme du métier. Il peut être réalisé, par exemple, par imprégnation du support déjà préparé avec les éléments catalytiquement actifs ou des précurseurs de ces éléments, ou par mélange des éléments catalytiquement actifs ou des précurseurs avec la matière du support au cours de la mise en forme de ce dernier. Dans le cas de l'alumine, le dépôt de la phase catalytique dans le support peut être également réalisé par coprécipitation de l'alumine et des éléments catalytiquement actifs ou leurs précurseurs.

Dans le cas d'un dépôt par imprégnation, celui-ci se fait de manière connue par mise en contact du support avec une solution, un sol ou un gel comprenant au moins un élément catalytiquement actif sous forme d'oxyde ou de sel ou d'un de leurs précurseurs.

L'opération est réalisée en général par trempage du support dans un volume déterminé de solution d'au moins un précurseur d'un élément catalytiquement actif. Par solution d'un précurseur d'un élément catalytiquement actif, on entend une solution d'un sel ou composé de l'élément ou d'au moins un des éléments constituant la phase catalytiquement active, ces sels et composés étant thermiquement décomposables. D'une manière générale, on utilise le nitrate de cuivre en tant que précurseur du cuivre.

La concentration en sel de la solution est choisie en fonction de la quantité de phase active à déposer sur le support.
La surface d'imprégnation de la phase catalytiquement active est déterminée par le volume de solution adsorbé. Ainsi, le volume adsorbé de la phase catalytiquement active est égal au volume poreux total du support à imprégner. Il est également possible d'imprégner le support par trempage de celui-ci dans la solution de précurseur d'élément catalytiquement actif et d'éliminer l'excès de solution par égouttage.

Selon un mode préféré, la phase catalytiquement active est déposée par imprégnation à sec.

Le support peut ensuite être soumis à une opération de séchage et éventuellement de calcination. Par exemple, le catalyseur peut être calciné à une température située entre 300 et 1000 °C, de préférence entre 300 et 800 °C.

Il est également possible de répéter ces opérations avec le même support, après l'avoir séché et calciné, et de déposer successivement plusieurs éléments ou plusieurs fois du cuivre sur le support. Ces dépôts successifs peuvent se faire sur des surfaces déterminées qui peuvent varier à chaque dépôt. Ainsi, selon un mode de préparation préféré des catalyseurs utilisés dans la présente invention, l'élément cuivre de la phase catalytiquement active du catalyseur est déposé sur le support par imprégnation, puis séchage et calcination, et réitération au moins une fois de ces mêmes opérations.

Lorsque le dépôt de la phase catalytiquement active est réalisé au cours de la mise en forme, les éléments catalytiquement actifs ou leurs précurseurs sont mélangés à la matière première du support avant sa mise en forme.

L'invention concerne également l'utilisation du catalyseur précédemment décrit pour l'oxydation directe des composés soufrés en soufre élémentaire. Cette utilisation permet notamment de traiter des effluents contenant des quantités d'H$_2$S inférieures à 2 % en volume.

Les temps de contact du milieu réactionnel avec le catalyseur peuvent aller de 0,5 à 20 s, de préférence de 1 à 10 s, voire de 2 à 8 s, ces valeurs étant données dans les conditions standards de pression et de température, de préférence, l'oxydation directe est menée à un temps de contact d'au moins 3 s.

En général, le procédé selon l'invention est mis en oeuvre en continu : dans un premier temps les composés soufrés sont oxydés en soufre et/ou sulfates à l'aide du catalyseur, puis dans un second temps le catalyseur est régénéré pour être réutilisé.

Ainsi, on fait tout d'abord passer le gaz à traiter additionné d'oxygène sur le catalyseur à une température comprise entre 50 et 200°C, de préférence entre 100 et 170°C.

Puis, dans un deuxième temps, on balaye le catalyseur chargé en soufre à l'aide d'un gaz exempt d'oxygène à une température comprise entre 200 et 500°C, de manière à le régénérer.

Ce procédé s'applique particulièrement bien au traitement des mélanges gazeux à basse teneur en H$_2$S, car la réaction est très exothermique et une élévation importante de la température aurait pour conséquence d'une part la vaporisation d'au moins une partie du soufre produit par la réaction et d'autre part l'oxydation de l'$H_2$S serait moins sélective : on aurait des quantités de $SO_2$ formées plus importantes.

Les exemples suivants illustrent l'invention sans toutefois en limiter la portée.

**EXEMPLES**

**Préparation de catalyseurs selon l'invention**

Les caractéristiques des supports utilisés sont rassemblées dans le tableau 1.

Tableau 1

| Type | Nature | Surface spécifique ($m^2$/g) | Volume poreux total ($cm^3$/g) | Diamètre ou section transversale (mm) |
|---|---|---|---|---|
| Billes 1 | Alumine | 192 | 0,71 | 2-3,2 |
| Billes 2 | Alumine | 315 | 0,5 | 2-3,2 |
| Billes 3 | Alumine | 68 | 0,68 | 2-3,2 |
| Billes 4 | Alumine | 131 | 1,04 | 2-3,2 |
| Extrudés 1 | Alumine | 229 | 0,65 | 1,2 |
| Extrudés 2 | Dioxyde de titane | 124 | 0,36 | 3,5 |

1. Dépôt de l'élément cuivre :

On prépare des catalyseurs présentant différentes phase catalytiquement actives à base de cuivre en imprégnant ces supports par des sels. L'imprégnation est réalisée à sec. Les conditions de séchage et de calcination dépendent de la nature du sel de cuivre d'imprégnation et sont indiquées ci-dessous :

- sulfate de cuivre : séchage : 15 h à 120 °C
      calcination : 12 h à 350 °C
- nitrate de cuivre : séchage : 15 h à 85 °C
      calcination : 3 h à 500°C

Pour les billes 1 imprégnées de 16 et 21 % de cuivre, le procédé de préparation a été modifié. En effet, deux imprégnations ont été réalisées par du nitrate de cuivre engageant chacune la moitié de la quantité de cuivre désiré et en respectant les conditions suivantes :

- 1ère imprégnation : séchage : 15 h à 85°C
      calcination : . 3 h à 750°C pour le dépôt de 16 % de cuivre
                . 3 h à 550°C pour le dépôt de 21 % de cuivre
- 2éme imprégnation : séchage : 15 h à 85°C
      calcination : 3 h à 500°C

2. Dépôt des éléments différents du cuivre :

Les sels utilisés pour les différents métaux sont les suivants :

- cuivre sulfate ou nitrate
- fer : sulfate ou nitrate
- cobalt sulfate ou nitrate
- nickel : sulfate ou nitrate
- manganèse : acétate
- calcium : sulfate
- molybdène : heptamolybdate d'ammonium
- vanadium : oxalate
- ruthénium : chlorure

Pour les billes qui ont été imprégnées à la fois de cuivre et soit de fer, soit de molybdène, soit de cobalt, soit de nickel, soit de vanadium, le procédé de préparation consiste à d'abord imprégner les billes du sel de rélément différent du cuivre, puis à les sécher à 85°C pendant 15 h. Elles sont ensuite imprégnées de nitrate de cuivre, puis séchées à 85°C pendant 15 h et calcinées à 500°C pendant 3 h.

Un procédé d'imprégnation différent a été utilisé pour le dépôt de cuivre et de ruthénium : les billes ont été imprégnées d'abord par le sel de cuivre, puis séchées à 85°C pendant 15 h et calcinées à 500°C pendant 3 h. Elles ont ensuite été imprégnées de chlorure de ruthénium, puis séchées à 85°C pendant 15 h et calcinées à 250°C pendant 1 h.

## Test catalytique

Le protocole du test catalytique se déroule en trois étapes.

On soumet tout d'abord le catalyseur à un prévieillissement de manière à le tester dans des conditions d'utilisation normales. Ce prévieillissement est une présulfatation à 140°C par passage pendant 20 h d'un effluent dont la composition moyenne en volume est: :

1,5 % de $H_2S$
2,4 % d'$O_2$
30 % d'$H_2O$
66,1 % de $N_2$

On soumet ensuite le catalyseur à une régénération à 300°C par passage pendant 6 h d'un effluent dont la composition moyenne en volume est :

30 % de $H_2O$
70 % de $N_2$

puis passage pendant 8 h d'un autre effluent dont la composition moyenne en volume est :

2,6 % $H_2S$
30 % $H_2O$
67,4 % de $N_2$

Enfin, la réaction d'oxydation directe est menée à 140°C par passage d'un effluent comprenant :

2500 ppm d'$H_2S$
4000 ppm d'$O_2$
30 % $H_2O$
69,35 % de $N_2$.

Durant cette dernière étape, la conversion a de l'$H_2S$ et le rendement β en $SO_2$ sont mesurés pour un temps de réaction de 8 h et un temps de contact de 4 s ou 2 s.

Les résultats sont rassemblés dans les tableaux 2 et 3.

Tableau 2

| | | Temps de contact : 4 s | | Temps de contact : 2 s | |
|---|---|---|---|---|---|
| **Nature de la phase catalytique (nature du sel d'imprégnation)** | **% en poids d'élément par rapport au catalyseur** | **α : conversion de $H_2S$** | **β : rendement en $SO_2$** | **α : conversion de $H_2S$** | **β : rendement en $SO_2$** |
| BILLES 1 (alumine) | | | | | |
| Cu (sulfate) : | 4,1 % | 72 | 0 | 44 | 0 |
| Cu (sulfate) : | 7,9 % | 100 | 0 | 53 | 0 |
| Cu (nitrate) : | 7.9% | 100 | 0 | 64 | 1 |

Tableau 2   (suite)

| Nature de la phase catalytique (nature du sel d'imprégnation) | % en poids d'élément par rapport au catalyseur | Temps de contact : 4 s | | Temps de contact : 2 s | |
|---|---|---|---|---|---|
| | | $\alpha$ : conversion de $H_2S$ | $\beta$ : rendement en $SO_2$ | $\alpha$ : conversion de $H_2S$ | $\beta$ : rendement en $SO_2$ |
| BILLES 1 (alumine) | | | | | |
| Cu (nitrate) : | 14,2 % | 95 | 3 | 65 | 3 |
| Cu (nitrate) : | 16 % | 73 | 2 | 54 | 1 |
| Cu (nitrate) : | 21 % | 100 | 0 | 81 | 3 |
| Cu (nitrate) : | 7,6 % | 100 | 2 | 97 | 6 |
| Fe (nitrate) : | 2,4 % | | | | |
| Cu (nitrate) : | 7,3 % | 100 | 0 | 96 | 10 |
| Fe (nitrate) : | 4,8 % | | | | |
| Cu (nitrate) : | 10,6 % | 97 | 3 | 59 | 2 |
| Co (nitrate) : | 0,9 % | | | | |
| Cu (nitrate) : | 9,7 % | 100 | 0 | 79 | 3 |
| Co (nitrate) : | 1,7 % | | | | |
| Cu (nitrate) : | 9,7 % | 100 | 0 | 82 | 6 |
| Co (nitrate) : | 2,6 % | | | | |
| Cu (nitrate) : | 10,5 % | 100 | 7 | 98 | 14 |
| Ni (nitrate) : | 1,9 % | | | | |
| Cu (nitrate) : | 6,6 % | 75 | 0 | 59 | 0 |
| Mo: | 10,0 % | | | | |
| Co (sulfate)* : | 3,8 % | 99 | 39 | 98 | 15 |
| Mn * : | 3,5 % | 34 | 3 | 31 | 4 |
| Fe (sulfate)* : | 1,9 % | 93 | 23 | 69 | 16 |
| Fe (sulfate)* : | 6,9 % | 97 | 65 | 83 | 24 |
| Ni (sulfate)* : | 3,8 % | 97 | 18 | 94 | 22 |
| BILLES 2 (alumine) | | | | | |
| Cu (nitrate) : | 4,1 % | 100 | 0 | 73 | 0 |
| BILLES 3 (alumine) | | | | | |
| Cu (nitrate) : | 7,9 % | 86 | 0 | 39 | 0 |
| BILLES 3 (alumine) | | | | | |
| Cu (nitrate) : | 11,9 % | 100 | 0 | 48 | 0 |

* exemples comparatifs

Tableau 3

| Nature de la phase catalytique (nature du sel d'imprégnation) | Teneur en élément par rapport au catalyseur | Temps de contact : 4 s | | Temps de contact : 2 s | |
|---|---|---|---|---|---|
| | | $\alpha$ : conversion de $H_2S$ | $\beta$ : rendement en $SO_2$ | $\alpha$ : conversion de $H_2S$ | $\beta$ : rendement en $SO_2$ |
| EXTRUDES 1 (alumine) | | | | | |
| Cu (nitrate) : | 7,9% | 100 | 0 | 71 | 1 |
| Cu (nitrate) : | 10,2 % | 100 | 2 | 79 | 4 |
| Co (nitrate) : | 0,9 % | | | | |
| Cu (nitrate) : | 10,2 % | 93 | 5 | 76 | 3 |
| V : | 0,8 % | | | | |
| Cu (nitrate) : | 10,1 % | 100 | 2 | 78 | 2 |
| Ru : | 1,4 % | | | | |
| EXTRUDES 2 (dioxyde de titane) | | | | | |
| Cu (sulfate) : | 7,9 % | 99 | 1 | 71 | 0 |
| Ca : | 4,1 % | | | | |
| Fe (sulfate)* : | 1,8 % | 100 | 33 | 100 | 31 |
| Ca : | 4,3 % | | | | |
| Ca* : | 4,4 % | 49 | 0 | 46 | 0 |

\* exemples comparatifs

On constate que tous les catalyseurs à base de cuivre permettent d'obtenir une bonne conversion totale de l'$H_2S$, tout en minimisant la formation de $SO_2$.

Au contraire, les catalyseurs de l'art antérieur présentent soit une bonne conversion de l'$H_2S$ mais simultanément un rendement élevé en $SO_2$ (comme ceux à base de Co, Fe et Ni) ; soit un rendement faible en $SO_2$ mais une mauvaise conversion de l'$H_2S$ (comme ceux à base Mn).

## Revendications

1.   Procédé d'oxydation directe des composés soufrés en soufre élémentaire et/ou en sulfates à température inférieure à 200°C, **caractérisé en ce qu'**on utilise un catalyseur supporté dont la phase catalytiquement active comprend du cuivre, l'élément cuivre étant présent dans une teneur d'au moins 4 % en poids par rapport au catalyseur et d'au moins 15 % en poids par rapport à la somme des éléments actifs de la phase catalytiquement active.

2.   Procédé selon la revendication 1, **caractérisé en ce que** la phase catalytiquement active ne comprend que le cuivre comme élément actif.

3.   Procédé selon la revendication 2, **caractérisé en ce que** la teneur. en cuivre est d'au moins 6 % en poids par rapport au catalyseur.

4.   Procédé selon la revendication 1, **caractérisé en ce que** la phase catalytiquement active comprend du cuivre et au moins un autre élément catalytiquement actif choisi parmi le fer, le molybdène, le titane, le nickel, le cobalt, l'étain, le germanium, le gallium, le ruthénium, l'antimoine, le niobium, le manganèse, le vanadium, le magnésium, le calcium et le chrome.

5.   Procédé selon la revendication 4, **caractérisé en ce que** la phase catalytiquement active se compose de cuivre et de cobalt, la teneur en cobalt étant d'au plus 5 % en poids par rapport au catalyseur et la teneur en cuivre d'au moins 6 % en poids par rapport au catalyseur.

6. Procédé selon l'une quelconque des revendications précédentes, **caractérisé en ce que** l'élément cuivre de la phase catalytiquement active est issu du nitrate de cuivre.

7. Procédé selon l'une quelconque des revendications précédentes, **caractérisé en ce que** l'élément cuivre de la phase catalytiquement active du catalyseur est déposé sur le support par imprégnation, puis séchage et calcination, et réitération au moins une fois de ces mêmes opérations.

8. Procédé selon l'une quelconque des revendications précédentes, **caractérisé en ce que** le support du catalyseur est à base de dioxyde de titane, de zircone, de silice, de silice-alumine ou d'alumine.

9. Procédé selon la revendication précédente, **caractérisé en ce que** le support est à base d'alumine, ladite alumine présentant une surface spécifique d'au moins 20 $m^2$/g et un volume poreux total d'au moins 0,3 $cm^3$/g.


**Patentansprüche**

1. Verfahren zur direkten Oxidation der schwefelhaltigen Verbindungen zu elementarem Schwefel und/oder zu Sulfaten bei Temperaturen unter 200°C, **dadurch gekennzeichnet, dass** man einen Katalysator auf Träger verwendet, dessen katalytisch aktive Phase Kupfer umfasst, wobei das Element Kupfer in einem Gehalt von wenigstens 4 Gew.-%, bezogen auf den Katalysator, und von wenigstens 15 Gew.-%, bezogen auf die Summe der aktiven Elemente der katalytisch aktiven Phase, vorhanden ist.

2. Verfahren nach Anspruch 1, **dadurch gekennzeichnet, dass** die katalytisch aktive Phase nur Kupfer als aktives Element umfasst.

3. Verfahren nach Anspruch 2, **dadurch gekennzeichnet, dass** der Gehalt an Kupfer wenigstens 6 Gew.-%, bezogen auf den Katalysator, beträgt.

4. Verfahren nach Anspruch 1, **dadurch gekennzeichnet, dass** die katalytisch aktive Phase Kupfer und wenigstens ein anderes katalytisch aktives Element umfasst, das gewählt ist aus Eisen, Molybdän, Titan, Nickel, Kobalt, Zinn, Germanium, Gallium, Ruthenium, Antimon, Niob, Mangan, Vanadium, Magnesium, Kalzium und Chrom.

5. Verfahren nach Anspruch 4, **dadurch gekennzeichnet, dass** die katalytisch aktive Phase sich aus Kupfer und Kobalt zusammensetzt, wobei der Kobaltgehalt höchstens 5 Gew.-%, bezogen auf den Katalysator, und der Kupfergehalt wenigstens 6 Gew.-%, bezogen auf den Katalysator, ausmacht.

6. Verfahren nach einem der vorhergehenden Ansprüche, **dadurch gekennzeichnet, dass** das Element Kupfer der katalytisch aktiven Phase aus dem Kupfernitrat stammt.

7. Verfahren nach einem der vorhergehenden Ansprüche, **dadurch gekennzeichnet, dass** das Element Kupfer der katalytisch aktiven Phase des Katalysators auf dem Träger durch Imprägnieren, dann Trocknen und Kalzinieren abgeschieden wird, wobei eben diese Vorgänge wenigstens einmal wiederholt werden.

8. Verfahren nach einem der vorhergehenden Ansprüche, **dadurch gekennzeichnet, dass** der Träger des Katalysators auf Titandioxid-, Zirkonoxid-, Silizium(di)oxid-, Silizium(di)oxid-Aluminiumoxid- oder Aluminiumoxidbasis beruht.

9. Verfahren nach dem vorhergehenden Anspruch, **dadurch gekennzeichnet, dass** der Träger eine Aluminiumoxidbasis hat, wobei das Aluminiumoxid eine spezifische Oberfläche von wenigstens 20 $m^2$/g und ein Porengesamtvolumen von wenigstens 0,3 $cm^3$/g aufweist.


**Claims**

1. Process for the direct oxidation of sulphur compounds into elemental sulphur and/or into sulphates at a temperature below 200°C, **characterized in that** a supported catalyst whose catalytically active phase comprises copper is used, the copper element being present in a content of at least 4% by weight relative to the catalyst and of at least 15% by weight relative to the sum of the active elements of the catalytically active phase.

2. Process according to claim 1, **characterized in that** the catalytically active phase comprises only copper as active element.

3. Process according to claim 2, **characterized in that** the copper content is at least 6% by weight relative to the catalyst.

4. Process according to claim 1, **characterized in that** the catalytically active phase comprises copper and at least one other catalytically active element chosen from iron, molybdenum, titanium, nickel, cobalt, tin, germanium, gallium, ruthenium, antimony, niobium, manganese, vanadium, magnesium, calcium and chromium.

5. Process according to claim 4, **characterized in that** the catalytically active phase is composed of copper and cobalt, the cobalt content being not more than 5% by weight relative to the catalyst and the copper content being not less than 6% by weight relative to the catalyst.

6. Process according to any one of the preceding claims, **characterized in that** the copper element of the catalytically active phase is obtained from copper nitrate.

7. Process according to any one of the preceding claims, **characterized in that** the element copper of the catalytically active phase of the catalyst is deposited on the support by impregnation, then drying and calcining, and repeating at least once the same operations.

8. Process according to any one of the preceding claims, **characterized in that** the catalyst support is based on titanium dioxide, zirconia, silica, alumina-silica or alumina.

9. Process according to the preceding claim, **characterized in that** the support is based on alumina, the said alumina having a specific surface of at least 20 $m^2$/g and a total pore volume of at least 0.3 $cm^3$/g.